**Europäisches Patentamt**

**European Patent Office**

**Office européen des brevets**

(11) Numéro de publication : **0 331 592 B1**

(12) **FASCICULE DE BREVET EUROPEEN**

(45) Date de publication du fascicule du brevet :
23.12.92 Bulletin 92/52

(21) Numéro de dépôt : **89420076.5**

(22) Date de dépôt : **28.02.89**

(51) Int. CI.⁵ : **H04N 3/185**, H02M 3/335

(30) Priorité : **04.03.88 FR 8803079**

(43) Date de publication de la demande :
**06.09.89 Bulletin 89/36**

(45) Mention de la délivrance du brevet :
**23.12.92 Bulletin 92/52**

(84) Etats contractants désignés :
**DE FR GB IT NL**

(56) Documents cités :
**EP-A- 0 080 915**
**FR-A- 2 431 216**

(54) **Dispositif de démarrage progressif d'une alimentation à découpage.**

(73) Titulaire : **SGS-THOMSON MICROELECTRONICS S.A.**
**7, Avenue Galliéni**
**F-94250 Gentilly (FR)**

(72) Inventeur : **Maige, Philippe**
**47, Avenue Aristide Bergès**
**F-38170 Seyssinet Parizet (FR)**
Inventeur : **Merval, Jean-Marc**
**24, Rue de la Gare**
**F-38120 Saint Egrève (FR)**

(74) Mandataire : **de Beaumont, Michel**
**1bis, rue Champollion**
**F-38000 Grenoble (FR)**

Jouve, 18, rue Saint-Denis, 75001 PARIS

EP 0 331 592 B1

## Description

La présente invention concerne le domaine de alimentations à découpage, par exemple du type couramment utilisé dans les téléviseurs.

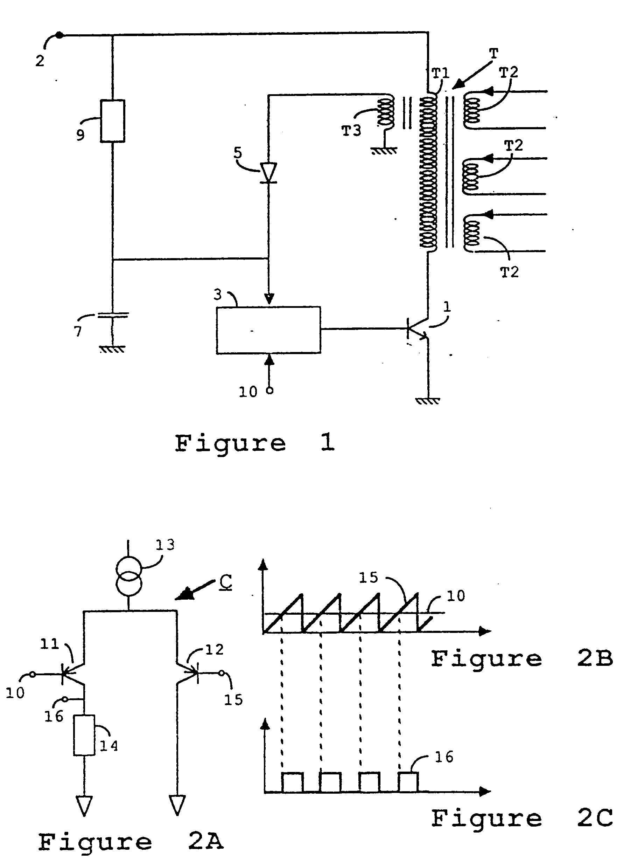

La figure 1 rappelle quelques caractéristiques principales d'une alimentation à découpage. Celle-ci comprend essentiellement un transformateur T dont l'enroulement primaire $T_1$ est connecté en série avec un interrupteur de puissance, couramment un transistor de puissance 1. Ainsi, du courant circule dans l'enroulement primaire $T_1$ entre une borne d'alimentation 2 et la masse quand le transistor 1 est rendu conducteur. En fonctionnement, ce transistor 1 reçoit des impulsions répétitives de commande de base à partir d'un circuit intégré 3 et assure donc pendant chacune de ses phases de conduction la transmission d'énergie du primaire $T_1$ aux secondaires $T_2$ du transformateur T. On a désigné par la référence $T_3$ un enroulement secondaire particulier qui est relié par l'intermédiaire d'une diode 5 au circuit intégré de commande de base 3 pour assurer son alimentation. Ainsi, le circuit intégré 3 n'est alimenté qu'une fois que l'alimentation à découpage fonctionne. A la mise sous-tension du système, ce circuit intégré n'est pas alimenté par l'enroulement secondaire $T_3$. On prévoit donc généralement un circuit auxiliaire comprenant un condensateur 7 chargé à travers une résistance 9 reliée à la borne d'alimentation 2 pour assurer l'alimentation initiale du circuit avant le démarrage de l'alimentation à découpage.

Le circuit intégré 3, reçoit sur une borne 10 des signaux d'asservissement produits à partir du signal d'au moins l'un des enroulements secondaires $T_2$, couramment par l'intermédiaire d'un autre circuit intégré, pour fournir une séquence d'impulsions de commande au transistor de puissance 1 de façon à obtenir au secondaire une tension stabilisée. Il s'agit là d'une commande de modulation en largeur d'impulsion, couramment désignée par le sigle PWM d'après son appellation anglo-saxonne Pulse Width Modulation.

La figure 2A représente un élément du circuit intégré 3 permettant la modulation PWM. Cette figure représente essentiellement un comparateur C comprenant deux transistors 11 et 12 dont les émetteurs sont interconnectés et reçoivent le courant d'une source de courant 13 ; le collecteur du transistor 12 est relié directement à la masse et le collecteur du transistor 11 est relié à la masse par l'intermédiaire d'une résistance 14. Ce comparateur comprend une première entrée de comparaison sur la base du transistor 11 correspondant à la borne 10 indiquée précédemment, une deuxième entrée de comparaison 15 sur la base du transistor 12 recevant un signal en dents de scie, et une sortie 16 sur le collecteur du transistor 11.

La figure 2B représente schématiquement le signal en dents de scie incident sur la borne 15 et la tension d'asservissement sur la borne 10. La figure 2C indique les impulsions de sortie sur la borne 16 destinées à commander (par l'intermédiaire de circuits d'amplification) la base du transistor de puissance 1. Avec le montage particulier représenté, plus la tension d'asservissement 10 est proche du seuil bas de la dent de scie 15, plus la largeur des impulsions 16 est importante. Il s'agit bien entendu là d'un choix arbitraire et l'on pourrait prévoit un système inverse. Néanmoins on se placera dans la suite de la présente description dans la cadre de ce choix.

Au démarrage de l'alimentation à découpage, les secondaires ne sont pas alimentés et le signal d'asservissement 10 sera à niveau bas provoquant une demande d'énergie maximale. La durée de conduction du transistor 1 sera donc immédiatement maximale, d'où il peut résulter de nombreux inconvénients liés aux éléments inductifs du circuit, et à des risques de saturation du transformateur.

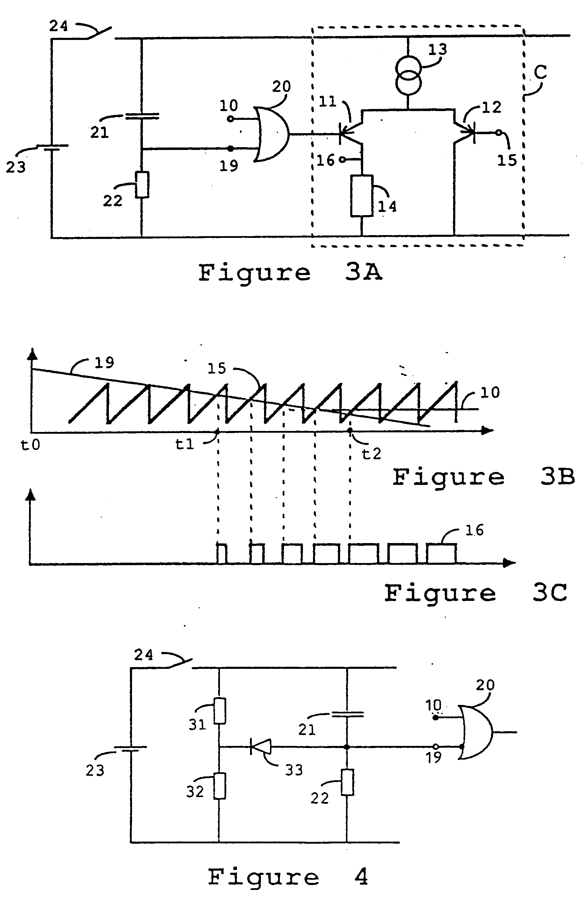

Pour éviter ces inconvénients, on a prévu dans l'art antérieur des circuits de démarrage progressif de l'alimentation à découpage dont un exemple schématique est illustré en figure 3A. On retrouve en figure 3A le comparateur C de la figure 2A. Toutefois, l'entrée de signal d'asservissement 10, au lieu d'être connectée directement à la base du transistor 11 est connectée à cette base par l'intermédiaire d'un circuit OU analogique 20 qui a pour fonction de laisser passer le plus fort des deux signaux qu'il reçoit à ses entrées. La deuxième entrée 19 du circuit OU analogique 20 est connectée au point de liaison d'un condensateur 21 dont l'autre borne est reliée à la source de tension haute et d'une résistance 22 dont l'autre borne est reliée à la masse. On a également représenté symboliquement en figure 3A une source de tension 23 et un commutateur 24 qui est fermé quand le circuit est mis en route.

La figure 3B représente l'allure des signaux d'entrée sur les bornes 10, 15 et 19 et la figure 3C représente l'allure des impulsions de commande sur la borne de sortie 16. A l'instant $t_0$ de fermeture de commutateur 24, la borne 19 est au potentiel haut et ce potentiel chute tandis que le condensateur 21 se charge. La dent de scie 15 commence à apparaître au bout d'un certain temps et, à un instant $t_1$, le signal sur la borne 19 atteint le niveau supérieur de la dent de scie 15. A cet instant, une première impulsion est fournie en sortie, c'est-à-dire que l'alimentation à découpage commence à fonctionner. Ensuite, tandis que la tension sur la borne 19 décroît, des impulsions de largeurs progressivement croissantes sont fournies sur la borne de sortie 16 jusqu'à un instant $t_2$ où le relais est pris par la tension d'asservissement apparaissant sur la borne 10.

On notera que les figures 3B et 3C sont représentées à titre purement illustratif et qu'elles ne sont absolument pas tracées à l'échelle. En fait, classiquement, dans une alimentation à découpage de téléviseur, la période des dents de scie correspond à la période de balayage horizontal du téléviseur, c'est-à-dire par exemple 64 microsecondes. La durée du temps mort initial entre les instants $t_0$ et $t_1$ est de l'ordre d'une centaine de millisecondes, et la durée de la mise en route progressive entre les instants $t_1$ et $t_2$ est également de l'ordre de la centaine de millisecondes, c'est-à-dire que la décroissance du signal 19 s'étale sur quelques milliers de périodes de la dent de scie.

Les divers dispositifs décrits précédemment existent à l'heure actuelle et sont par exemple utilisés dans les circuits d'alimentation à découpage pour téléviseurs commercialisés sous les appellations TEA 5170, UAA 4001, UAA 4006 de la société SGS-Thomson Microelectronics SA.

Ce circuit a donné satisfaction, en ce qui concerne le démarrage progressif entre les instants $t_1$ et $t_2$. Il présente toutefois un inconvénient car il existe un temps mort important entre les instants $t_0$ et $t_1$ c'est-à-dire entre le moment de la mise sous tension et l'apparition des premières impulsions de commande.

Pour pallier cet inconvénient, on a proposé dans l'art antérieur d'assurer une charge initiale du condensateur 21 proche du seuil haut de la dent de scie avec un circuit du type illustré en figure 4. On retrouve dans ce circuit, outre les éléments déjà décrits en figure 3A, deux résistances 31 et 32 connectées en série entre les bornes d'alimentation haute et basse, dont le point de raccordement est relié au point de raccordement du condensateur 21 et de la résistance 22 par l'intermédiaire d'une diode 33. Ainsi, la tension sur la borne 19, au lieu de partir de la valeur haute $V_{CC}$ de la tension d'alimentation, part d'une valeur égale à $V_{CC}[R1/(R1+R2)] + VD$, VD étant la chute de tension directe dans la diode 33. Il en résulte que la durée s'étendant entre les instants $t_0$ et $t_1$ est raccourcie. Un tel dispositif existe par exemple dans les circuits dits TEA 2164 et TEA 2029 commercialisés par la société SGS-Thomson Microelectronics SA, les éléments 31, 32 et 33 étant externes au circuit intégré pour le TEA 2029 et internes pour le TEA 2164. Avec ce dispositif, on réduit le temps mort entre les instants $t_0$ et $t_1$ mais la précision du système n'est pas très bonne car elle dépend de la précision sur les résistances R1 et R2 et de la précision sur l'amplitude de la dent de scie ainsi que de la dérive due à la diode 33. Pour cette raison, on est obligé de prévoir une marge de sécurité et il subsiste un temps mort qui est bien sûr réduit par rapport à celui de la solution antérieure mais qui présente l'inconvénient d'être très dispersé d'un circuit à l'autre.

Un inconvénient des temps morts relativement longs réside bien sûr dans la gêne apportée à l'utilisateur du téléviseur qui devra attendre un certain temps avant de recevoir des signaux d'image. Un autre inconvénient, que l'on peut voir en relation avec le schéma général de la figure 1, est que, si l'on prévoit un temps mort relativement important, le condensateur 7 assurant l'alimentation initiale du circuit intégré tant que l'alimentation à découpage n'est pas en régime établi devra présenter une valeur très importante et que la résistance 9 en série avec ce condensateur ne devra être trop élevée pour permettre la charge rapide de condensateur 7 lors de la mise sous tension. Si l'on peut réduire le temps mort, on peut à la fois réduire la valeur du condensateur 7 et augmenter la valeur de la résistance 9 ce qui réduit la consommation en régime établi.

Ainsi, un objet de la présente invention est de réduire la durée de temps mort telle qu'elle a été définie tout en assurant un bon démarrage progressif.

Un autre objet de la présente invention est de prévoir un tel circuit dont la plupart des éléments puissent être réalisés sous forme de circuits intégrés.

Ces objets de la présente invention sont atteints en prévoyant un circuit de démarrage progressif d'une alimentation à découpage à commande par impulsions de largeurs modulées obtenues par comparaison entre une tension en dents de scie oscillant entre des premier et deuxième niveaux et une tension d'asservissement dans lequel la tension d'asservissement est initialement fixée à une valeur externe à l'intervalle d'oscillation de la dent de scie, puis, dans une première phase varie jusqu'au premier niveau (temps mort) et dans une deuxième phase varie du premier au deuxième niveau pour produire des impulsions de commande de largeurs progressivement croissantes. Ce circuit comprend des moyens pour assurer la variation de la tension d'asservissement pendant la première phase selon une première pente puis la variation de cette tension d'asservissement pendant la deuxième phase selon une deuxième pente plus faible que la première, et des moyens pour assurer la commutation de pente à la suite de la détection de la première impulsion de commande.

Selon un mode de réalisation de la présente invention, les moyens de fourniture de tension variable comprennent des moyens d'injection de courant constant dans un condensateur, ce courant constant étant commutable entre au moins des première et seconde valeurs prédéterminées.

Ces objets, caractéristiques et avantages ainsi que d'autres de la présente invention seront exposés plus en détail dans la description suivante de modes de réalisation particuliers faite en relation avec les figures jointes parmi lesquelles :

les figures 1 à 4 destinées à illustrer l'état de l'art antérieur ont été décrites précédemment ;

la figure 5 représente un mode de réalisation de circuit de démarrage progressif selon la présente invention ; et

les figures 6A et 6B représentent des chronogrammes destinés à expliquer le fonctionnement du circuit de la figure 5.

Dans les diverses figures, de mêmes références numériques désignent des composants identiques ou analogues.

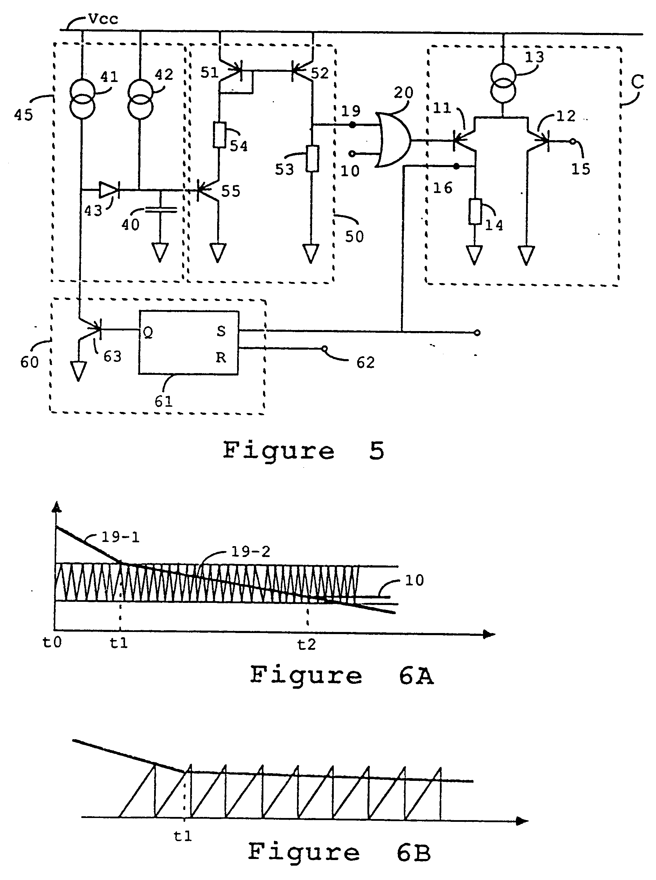

Dans la figure 5, on retrouve le comparateur C des figures 2A et 3A, comprenant les éléments référencés 11 à 16, ainsi que la porte OU analogique 20 associée aux entrées 10 et 19.

Le circuit selon la présente invention diffère des circuits de l'art antérieur dans la façon de fournir le signal sur la borne 19 pour assurer le démarrage progressif. Selon l'invention, ce signal est déterminé par la charge d'un condensateur 40 qui, dans une première phase correspondant au temps mort, est chargé relativement rapidement par l'action concomitante de deux sources de courant 41 et 42 tandis que, pendant la durée de mise en route proprement dite (entre les instants $t_1$ et $t_2$ sus-mentionnés), la charge se fait sous l'action d'une seule des deux sources de courant (42), la valeur de cette seule source de courant étant nettement inférieure à la somme des valeurs des deux sources de courant, par exemple 10 à 30 fois plus faible. Ainsi le temps mort sera court devant la durée du démarrage progressif.

De façon plus détaillée, le circuit de la figure 5 comprend, entre une source de tension haute $V_{CC}$ et la masse, le comparateur C susmentionné, un circuit de charge 45 du condensateur 40, un circuit d'inversion 50, et un circuit 60 de détection de l'instant où le fonctionnement de l'alimentation à découpage commence et de commutation des sources de courant susmentionnées.

Dans le mode de réalisation particulier représenté, le circuit 45 comprend le condensateur 40 dont une borne est reliée à la masse et dont l'autre borne est reliée à la source d'alimentation par l'intermédiaire de la source de courant 42 et du montage en série de la source de courant 41 et d'une diode 43. L'intensité de la source de courant 41 est nettement supérieure à l'intensité de la source du courant 42. La deuxième borne du condensateur 40 est reliée à l'entrée d'un inverseur de phase 50 dont la sortie est reliée à la borne d'entrée 19 de la porte OU analogique 20.

A titre d'exemple, l'inverseur de phase comprend deux transistors 51 et 52 montés en miroir de courant, c'est-à-dire que leurs émetteurs sont reliés à la tension haute $V_{CC}$, que leurs bases sont interconnectées, que la base du transistor 51 est reliée à son collecteur et que les collecteurs des transistors 51 et 52 sont reliés à la masse par des charges. Au collecteur du transistor 52 est connectée une résistance 53 et au collecteur du transistor 51 est connectée une résistance 54 en série avec un transistor 55 dont la base reçoit la tension aux bornes du condensateur 40.

Le circuit 60 comprend une bascule RS 61 dont l'entrée de remise à zéro R est reliée à une borne 62 qui reçoit un signal quand l'alimentation à découpage est mise sous tension, dont l'entrée S est reliée à la sortie 16 du comparateur C et dont la sortie Q est reliée à la base d'un transistor 63. Ce transistor 63 est connecté entre, d'une part, le point de raccordement de la source de courant 41 et de la diode 43 et, d'autre part, la masse.

Ainsi, à la mise sous tension de l'alimentation à découpage, entre les instants $t_0$ et $t_1$, le transistor 63 est bloqué et les sources de courant 41 et 42 débitent ensemble dans le condensateur 40 pour produire une charge rapide, ce qui produit, après inversion de phase, sur la borne 19, un signal 19-1 décroissant rapidement. A l'instant $t_1$, comme on l'a vu précédemment, il se produit à la sortie 16 du comparateur une première impulsion de courte durée. En conséquence, la bascule 61 commute et le transistor 63 devient conducteur d'où il résulte que la source de courant 41 est court-circuitée vers la masse et que seule la source de courant 42 débite dans le condensateur 40 qui se charge alors plus lentement et l'on a le démarrage progressif souhaité entre les instants $t_1$ et $t_2$ comme cela a été indiqué précédemment.

Ce circuit présente l'avantage de réduire considérablement le temps mort et d'être auto-adaptatif, puisque le circuit fonctionne et que le temps mort est sensiblement de même durée quelles que soient les variations des divers composants.

Bien entendu, le circuit selon la présente invention est susceptible de nombreuses variantes et modifications, en ce qui concerne la réalisation des blocs 45, 50 et 60 et du comparateur C.

Par exemple, si au lieu de connecter le condensateur 40 à la masse, on prévoyait une connexion de ce condensateur de façon à prélever initialement une tension haute puis une tension lentement décroissante, il serait inutile de prévoir l'inverseur 50.

D'autre part, on a indiqué pour simplifier l'exposé la prévision d'une porte OU analogique pour traiter ou bien le signal de démarrage progressif 19 ou bien le signal d'asservissement 10. On pourrait prévoir que chacun de ces signaux est appliqué à un comparateur du même type que le comparateur C et qu'ensuite les signaux logiques résultant de ces deux comparateurs sont appliqués à une porte ET de façon que seuls les créneaux de plus courte durée soient utilisés pour commander la base du transistor de puissance de l'alimentation à découpage.

Enfin, d'autres circuits pourraient remplacer le circuit de détection et de commutation 60.

**Revendications**

1. Dispositif de démarrage progressif d'une alimentation à découpage à commande par impulsions de largeurs modulées obtenues par comparaison entre une tension en dents de scie (15) oscillant entre des premier et deuxième niveaux et une tension d'asservissement (19) dans lequel la tension d'asservissement est initialement fixée à une valeur externe à l'intervalle d'oscillation de la dent de scie, puis, dans une première phase varie jusqu'au premier niveau (temps mort) et dans une deuxième phase varie du premier au deuxième niveau pour produire des impulsions de commande de largeurs progressivement croissantes, caractérisé en ce qu'il comprend des moyens (45, 50) pour assurer la variation de la tension d'asservissement pendant la première phase selon une première pente puis la variation de cette tension d'asservissement pendant la deuxième phase selon une deuxième pente plus faible que la première, et des moyens (60) pour assurer la commutation de pente à la suite de la détection de la première impulsion de commande.

2. Dispositif de démarrage progressif d'une alimentation à découpage selon la revendication 1, caractérisé en ce que les moyens de fourniture de tension variable comprennent des moyens (41, 42) d'injection de courant constant dans un condensateur (40), ce courant constant étant commutable entre au moins des première et seconde valeurs prédéterminées.

3. Dispositif de démarrage progressif d'une alimentation à découpage selon la revendication 2, caractérisé en ce que les moyens d'injection de courant constant dans le condensateur (40) comprennent une première source de courant (41) de valeur élevée et une deuxième source de courant (42) de valeur faible, ces sources de courant ayant une première borne reliée à une alimentation haute ($V_{CC}$) et une deuxième borne reliée au condensateur (40), la première source de courant étant reliée au condensateur (40) par l'intermédiaire d'une diode (43), le point de raccordement de la première source de courant et de la diode pouvant être connecté à la masse par les moyens de détection et de commutation (60) quand la première impulsion de commande a été détectée.

4. Dispositif de démarrage progressif d'une alimentation à découpage selon la revendication 3, caractérisé en ce que la première source de courant a une valeur dix à trente fois plus élevée que la deuxième source de courant.

**Patentansprüche**

1. Einrichtung mit progressivem Start für ein Schaltnetzteil, das durch impulsbreitenmodulierte Impulse gesteuert wird, die durch Vergleich einer zwischen ersten und zweiten Pegeln oszillierenden Sägezahnspannung (15) und einer Steuerspannung (19) erhalten wird, wobei die Steuerspannung anfangs auf einen außerhalb des Oszillationsintervalles des Sägezahnes gelegenen Wert eingestellt wird, anschließend in einer ersten Phase (Totzeit) bis zu einem ersten Pegel variiert und in einer zweiten Phase zwischen dem ersten und dem zweiten Pegel variiert wird, um Steuerimpulse mit progressiv wachsender Breite zu erzeugen, dadurch gekennzeichnet, daß Einrichtungen (45, 50) vorgesehen sind, um die Variation der Steuerspannung während der ersten Phase mit einer ersten Steigung und dann die Variation dieser Steuerspannung während der zweiten Phase mit einer gegenüber der ersten Steigung flacheren Steigung sicherzustellen, und daß eine Einrichtung (60) vorgesehen ist, um die Umschaltung der Steigung nach Erfassen des ersten Steuerimpulses sicherzustellen.

2. Einrichtung mit progressivem Start für ein Schaltnetzteil nach Anspruch 1, dadurch gekennzeichnet, daß die Einrichtungen zum Liefern der variablen Spannung Mittel (41,42) zum Einspeisen eines Konstantstromes in einen Kondensator (40) aufweisen, wobei dieser Konstantstrom zumindest zwischen einem ersten und einem zweiten vorbestimmten Wert umschaltbar ist.

3. Einrichtung mit progressivem Start für ein Schaltnetzteil nach Anspruch 2, dadurch gekennzeichnet, daß die Mittel (41,42) zum Einspeisen eines Konstantstromes in den Kondensator (40) eine erste Stromquelle (41) mit hohem Stromwert und eine zweite Stromquelle (42) mit niedrigem Stromwert aufweisen, daß die Stromquellen einen ersten Anschluß, der mit einer leistungsstarken Versorgungsquelle ($V_{CC}$) verbunden ist, und einen zweiten Anschluß aufweisen, der mit dem Kondensator (40) verbunden ist, daß die erste Stromquelle über eine Diode (43) mit dem Kondensator (40) verbunden ist, und daß der Verbindungspunkt der ersten Stromquelle und der Diode über die Einrichtungen (60) zum Erfassen und Umschalten mit Masse verbindbar sind, sobald der erste Steuerimpuls erfaßt worden ist.

4. Einrichtung mit progressivem Start für ein Schaltnetzteil nach Anspruch 3, dadurch gekennzeichnet, daß die erste Stromquelle einen zehn- bis dreißigmal höheren Stromwert als die zweite Stromquelle aufweist.

**Revendications**

1. A progressive start up device for a switching power supply controlled by modulated width pulses obtained by comparison between a saw-tooth voltage (15) oscillating between first and second levels and a servo control voltage (19) wherein the servo control voltage is initially set to a value external to the oscillation interval of the saw-tooth, then, in a first phase, varies towards a first level (dead time) and, in a second phase, varies from the first to the second level for supplying control pulses having progressively increasing widths, characterized in that it comprises means (45, 50) for ensuring the variation of the servo control voltage during the first phase according to a first slope and then the variation of this servo control voltage during the second phase according to a second slope, lower than the first one, and means (60) for ensuring the switching of the slope after the détection of the first control pulse.

2. A progressive start up device for a switching power supply according to claim 1, characterized in that said means for supplying a variable voltage comprise means (41, 42) for injecting a constant current into a capacitor (40), this constant current being switchable between at least first and second predetermined values.

3. A progressive start up device for a switching power supply according to claim 2, characterized in that said means for injecting a constant current into the capacitor (40) comprise a first current source (41) having a high value and a second current source (42) having a low value, said current sources having a first terminal connected to a high power supply ($V_{CC}$) and a second terminal connected to a capacitor (40), the first current source being connected to the capacitor (40) through a diode (43), the connection point of the first current source and of the diode being liable to be grounded through detecting and switching means (60) when the first control pulse has been detected.

4. A progressive start up device for a switching power supply according to claim 3, characterized in that the first current source has a value ten to thirty times higher than the second current source.

Figure 1

Figure 2A

Figure 2B

Figure 2C

Figure 3A

Figure 3B

Figure 3C

Figure 4

Figure 5

Figure 6A

Figure 6B